# EUROPEAN PATENT SPECIFICATION

(11) **EP 1 764 926 B1**
(45) Date of publication and mention of the grant of the patent: **03.06.2009**
(21) Application number: 06019377.8
(22) Date of filing: 15.09.2006
(51) Int. Cl.: H04B 1/26

(54) **Analog signal processing circuit and communication device therewith**
Analoge Signalverarbeitungsschaltung und Kommunikationsgerät damit
Circuit de traitement de signal circuit de traitement d'un signal analogique et appareil de communication avec ledit circuit

(30) Priority: 16.09.2005 JP 2005270300
(43) Date of publication of application: 21.03.2007
(73) Proprietor: KABUSHIKI KAISHA TOSHIBA, Tokyo 105-8001 (JP)
(72) Inventor: Tsuchie, Koji, 1-1 Shibaura 1-chome Minato-ku Tokyo (JP); Hamada, Mototsugu, 1-1 Shibaura 1-chome Minato-ku Tokyo (JP); Namekata, Minoru, 1-1 Shibaura 1-chome Minato-ku Tokyo (JP); Unekawa, Yasuo, 1-1 Shibaura 1-chome Minato-ku Tokyo (JP)
(74) Representative: HOFFMANN EITLE

(56) References cited:
- WO-A-00/11800
- WO-A-99/45636
- DE-A1- 10 315 408
- GB-A- 2 338 853

## Description

### BACKGROUND OF THE INVENTION

The present invention relates to communication equipment, and more specifically to a communication device having an analog signal processing circuit capable of simultaneously receiving signals of a plurality of standards.

Recently, a demand for multi-band and multi-mode system has increased. Only one wireless standard is not appropriate for all wireless applications, but various wireless standards such as a mobile telephone, a broadcast, a wireless LAN, a wireless PAN, etc. are used depending on each use. It is easily anticipated that a user will be able to use one mobile terminal to retrieve information by WEB browsing via a wireless LAN while enjoying a digital television broadcast using a headphone connected to a wireless PAN. Therefore, to attain the use above, it is an important and imminent problem to realize a small and low power-consumption multi-band and multi-mode terminal capable of simultaneously receiving radio signals of a plurality of standards, but a multi-mode and multi-band receiver normally requires a large number of analog-to-digital converters (hereinafter referred to as an ADC).

In a direct conversion system, a small radio unit can be realized, but requires a very large number of ADCs because it is necessary to separate the output of down conversion into an I (in-phase) component and a Q (quadrature-phase) component. Direct conversion system converts the signal such that the center frequency to be a direct current (hereinafter referred to as a DC). As the down converted signal is fold back on the DC, separation of an I component and a Q component cannot be performed after down-converted. Therefore, when the number of modes to be simultaneously received is N _{mode}, 2×N_{mode} ADCs are required.

Recent wireless communications have been realized over a broadband network, and according to it advanced specifications have been required for ADCs. The power consumption and area for a high-speed and high-resolution ADC are very large, and providing a large number of ADCs for a mobile radio unit is disadvantageous in power consumption, implementation size, and cost. Therefore, in a multi-mode and multi-band receiver normally requiring a large number of ADCs, it is very effective means for realizing a small, low cost, and low power consumption system to reduce the number of ADCs.

M. Patel et al., "Investigation of the performance of a multimode, multiband receiver for OFDM and cellular systems," VTC 2003-Fall, pp. 284-288.

In WO 00/11800 there is disclosed a multi-band, multi-function integrated transceiver for a communications system operating in one or more frequency bands of various number of channels per band. The system comprises an antenna and RF front end for each band, a separate RF to IF down converter for each band, an analog to digital converter for converting analog signals to digital signals from a combiner, a digital downconverter for converting the digital signals to baseband signals and a single digital processor sequentially timeshared among all the bands and channels.

In GB-A-2 338 853 there is disclosed a double band superheterodyne receiver with a single analog to digital converter. A radio receiver has first and second front end circuits for reception in two frequency bands. Each includes a mixer for downconverting received signals to a respective intermediate frequency. Signals from the two front end circuits are passed to a single analog to digital converter.

### SUMMARY OF THE INVENTION

According to one aspect of the present invention there is provided an analog signal processing circuit, comprising: a frequency conversion unit for converting frequencies of a plurality of radio frequency signals having different center frequencies or a plurality of radio frequency signals having the same center frequencies but different amplitude-characteristics or phase-characteristics; a frequency selection unit for selecting a signal output from the frequency conversion unit at a predetermined band width, and an addition unit for adding a plurality of signals output from the frequency selection unit, and characterized by a frequency re-conversion unit for converting a part or all of signal frequencies in the plurality of signals output from the frequency selection unit, wherein the addition unit is adapted to add a plurality of signals output from the frequency re-conversion unit.

According to another aspect of the present invention there is provided a communication device, comprising: a front-end unit for receiving a plurality of radio frequency signals having different center frequencies or a plurality of radio frequency signals having the same center frequencies but different amplitude-characteristics or phase-characteristics, an analog signal processing unit for converting the plurality of radio frequency signals to a desired band, an analog-to-digital conversion unit for converting an analog signal output from the analog signal processing unit into a digital signal, and a digital signal processing unit for demodulating the digital signal to a desired digital data, wherein the analog signal processing unit comprises: a frequency conversion unit for converting the frequencies of the plurality of radio frequency signals, a frequency selection unit for selecting a signal output from the frequency conversion unit at a predetermined band width, and an addition unit for adding the plurality of signals output from the frequency selection unit, and characterized in that the analog signal processing unit further comprises a frequency re-conversion unit for converting a part or all of signal frequencies in the plurality of signals output from the frequency selection unit; and the addition unit is adapted to add a plurality of signals output from the frequency re-conversion unit.

### BRIEF DESCRIPTION OF THE DRAWINGS

FIG. 1 is a block diagram of the communication device according to a first embodiment for embodying the present invention;
FIG. 2 is a block diagram of a communication device not according to the present invention but useful in the understanding thereof;
FIG. 3 shows the frequency spectrum of a signal in the communication device of FIG. 2;
FIG. 4 is a block diagram of the communication device according to a second embodiment for embodying the present invention;
FIG. 5 shows the frequency spectrum of a signal in the communication device according to the second embodiment for embodying the present invention;
FIG. 6 is a block diagram of the communication device according to a third embodiment for embodying the present invention;
FIG. 7 shows the frequency spectrum of a signal in the communication device according to the third embodiment for embodying the present invention;
FIG. 8 is a block diagram of the communication device according to a fourth embodiment for embodying the present invention;
FIG. 9 shows the frequency spectrum of a signal in the communication device according to the fourth embodiment for embodying the present invention;
FIG. 10 is a block diagram of the communication device according to a fifth embodiment for embodying the present invention;
FIG. 11 shows the frequency spectrum of a signal in the communication device according to the fifth embodiment for embodying the present invention;
FIG. 12 shows the frequency spectrum of a signal in the communication device according to a sixth embodiment for embodying the present invention; and
FIG. 13 shows the frequency spectrum of a signal in the communication device according to a seventh embodiment for embodying the present invention.

### DETAILED DESCRIPTION OF THE INVENTION

The embodiments of the present invention are explained below by referring to the attached drawings.

### (First embodiment)

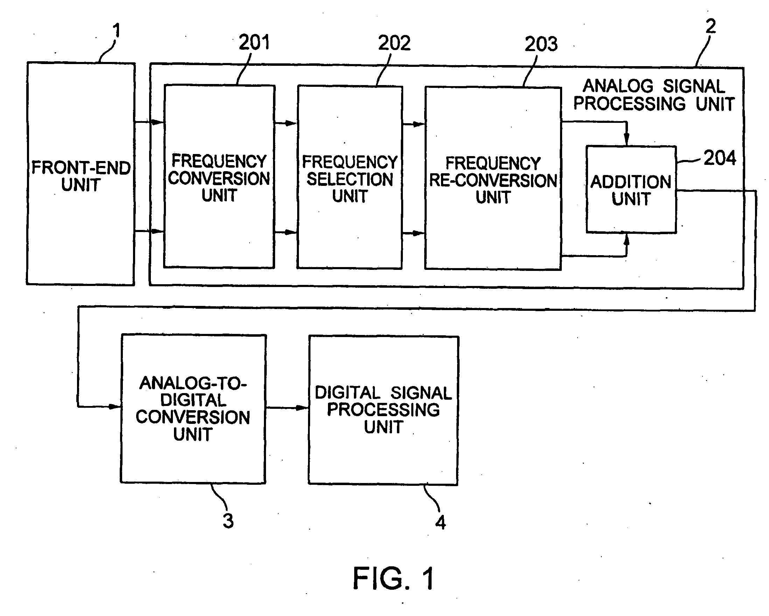

FIG. 1 is a block diagram of the communication device according to a first embodiment of the present invention, and receives a plurality of different radio signals (hereinafter referred to as RF (radio frequency) signals). Different RF signals means that each RF signals have different center frequencies each other, or, the same center frequencies but different amplitude-characteristics or phase-characteristics each other. FIG. 1 shows simultaneously receiving two different RF signals.

The communication device according to the present embodiment has a front-end unit 1 for receiving a plurality of different RF signals, an analog signal processing unit 2 for converting the received RF signals to a desired frequency band and combining them, an analog-to-digital conversion unit 3 for converting the analog signals combined by the analog signal processing unit 2 to digital signals, and a digital signal processing unit 4 for separating the combined digital signals in the digital signal processing.

The analog signal processing unit 2 has a frequency conversion unit 201, a frequency selection unit 202, a frequency re-conversion unit 203, and an addition unit 204. The frequency conversion unit 201 down converts each of the received RF signals to a predetermined frequency band (frequency band easily frequency-selected by the frequency selection unit 202 to be provided at the later stage). To down convert is to convert the frequency of a received RF signal to a signal at a lower frequency. A signal having a frequency band easily frequency-selected is, for example, a Low-IF (low intermediate frequency) signal or a baseband (B/B) signal. The Low-IF signal is a signal having a frequency several times the baseband frequency.

The frequency selection unit 202 allows a predetermined frequency band of a signal output from the frequency conversion unit 201 to pass through, and removes an interference signal. The interference signal is a general reference name of a signal having a frequency other than a desired frequency band.

The frequency re-conversion unit 203 reconverts the frequency to a frequency band at which data can be converted to digital data by the analog-to-digital conversion unit 3 provided at the later stage. The analog-to-digital conversion unit 3 is configured by a circuit including, for example, one or more ADCs.

The addition unit 204 combines a plurality of frequency-reconverted signals. Since the addition unit 204 combines the signals as described above, it is necessary that the frequency re-conversion unit 203 converts a frequency such that the signal bands of a plurality of signals do not overlap because the digital signal processing unit 4 separates again the signal into a plurality of signals.

The analog-to-digital conversion unit 3 converts the signal output from the addition unit 204 to a digital signal. The analog-to-digital conversion unit 3 is configured by, for example, a circuit containing one or more analog-to-digital converters (hereinafter referred to as an ADC).

The digital signal processing unit 4 separates a digital signal output from the analog-to-digital conversion unit 3 into signals corresponding to a plurality of received RF signals and performs a demodulation.

Next, the operation performed when two different RF signals (first signal and second signal) are simultaneously received in the communication device according to the present embodiment is explained below. The first and second signals are received in the front-end unit 1 by separate antennas not shown in the attached drawings. Each of the received first and second signals is converted into a desired frequency band, an interference signal is removed, and then the frequency is reconverted in the analog signal processing unit 2. The reconverted first and second signals are added by the addition unit 204 of the analog signal processing unit 2.

By adding a plurality of signals output from the frequency re-conversion unit 203, the number of analog signals can be smaller than the number of RF signals. Therefore, the number of wires for transmission of analog signals and for connection of the addition unit 204 to the analog-to-digital conversion unit 3 can be reduced. As a result, when the addition unit 204 and the analog-to-digital conversion unit 3 are formed on the same chip, the wiring on the chip can be easily performed. Furthermore, when the addition unit 204 and the analog-to-digital conversion unit 3 are implemented on the different chips on a board, the number of pins for connection of chips on which the addition unit 204 and the analog-to-digital conversion unit 3 are mounted can be smaller than the case where the addition unit 204 is not provided.

The analog signal is normally sensitive to noise, and for example, when an analog wiring for transmission of an analog signal is designed, it is necessary to carefully set the run length of wiring by avoiding the coupling with digital wiring for transmission of a digital signal, etc. On the other hand, in the communication device according to the present embodiment, since the number of analog signals sensitive to noise can be smaller and the number of analog wires required in setting the run length of wiring can also be reduced, the flexibility of basic design increases and the substrate can be smaller.

The added signals are converted from an analog signal to a digital signal by the analog-to-digital conversion unit 3, and output to the digital signal processing unit 4. In the digital signal processing unit 4, a digital signal is separated into the first and second signal components, and is demodulated. Since a plurality of RF signals are frequency-converted such that the respective signal bands cannot overlap one another, the number of ADCs configured by the analog-to-digital conversion unit 3 can be reduced to one. Thus, the communication device can be lower in power consumption, smaller, lighter, and less expensive.

### (Comparative arrangement)

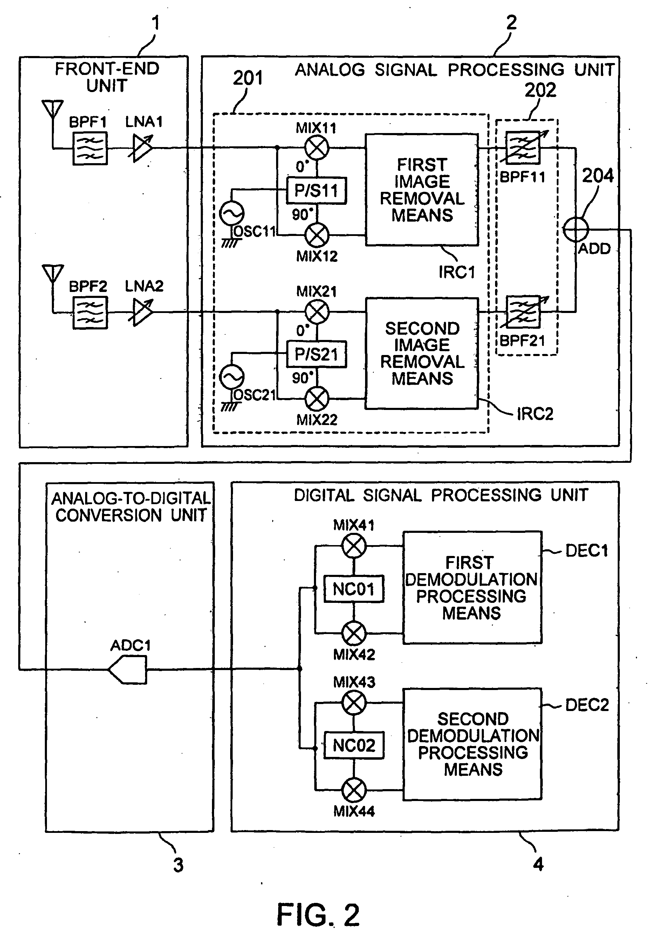

FIG. 2 is a block diagram of the communication device not according to the present invention but useful in the understanding thereof, and shows a radio receiver in a multi-band and multi-mode by the Low-IF system. The Low-IF system is a system of down converting the center frequency of an RF signal to the frequency between a half of the RF signal's band widths and several times of it. The same components shown in FIG. 1 are assigned the same reference numerals, and the explanation is omitted here. The different portions are explained below.

The front-end unit 1 has an antenna, a bandpass filter BPF, and a low noise amplifier LNA for a plurality of received RF signals. In the present arrangement, the front-end unit 1 has pairs of components, that is, two antennae, bandpass filters BPF 1 and BPF 2, and low noise amplifiers LNA 1 and LNA 2.

One antenna, the BPF 1, and the LNA 1 are connected in this order, and the received RF signal is transmitted first to the antennas, then to the BPF, and to the analog signal processing unit 2 via the LNA. The other antenna, the BPF 2 and the LNA 2 are similarly connected.

The BPF retrieves a desired frequency band from the received RF signal. The LNA does not frequency-convert the signal output from the BPF, but converts it into a signal having predetermined intensity of power.

Therefore, the received RF signal is converted into a signal having a desired frequency band and predetermined intensity of power via the front-end unit 1.

The frequency conversion unit 201 of the analog signal processing unit 2 is configured by two mixers MIX, phase shifters P/S, local oscillators OSC, and image rejection circuits IRC for a plurality of received RF signals. A mixer MIX is a circuit for converting a frequency by performing a multiplying operation using two signals. A phase shifter P/S is a circuit for shifting the phase of a sine wave (cosine wave), and can generate a cosine wave (sine wave) by 90° shifting the phase of the sine wave (cosine wave). A local oscillator OSC is an oscillator for frequency conversion. An image rejection circuit IRC is a circuit for suppressing an undesired image component, and is configured by, for example, a filter, etc.

Next, the connection in the frequency conversion unit 201 is explained below. First, the local oscillator OSC is connected to the phase shifter P/S. The phase shifter P/S is connected to each of the two mixers MIX. The phase shifter P/S generates a 0° phase-shifted sine wave and a 90° phase-shifted cosine wave based on the sine wave input from the local oscillator OSC, and provides them for two mixers MIX.

A received RF signal is input to each of the two mixers MIX aside from the phase shifters P/S. Each of the two mixers MIX frequency-converts an input RF signal using a sine wave or a cosine wave input from the phase shifter P/S, and separates it into the I component and the Q component.

An image rejection circuit IRC is connected to the two mixers MIX, and the I component and the Q component of the RF signal are input. Next, the I component and the Q component are added, an image component is removed and output to the frequency selection unit 202. The operation in the image rejection circuit IRC is performed, for example, as follows. When the frequency conversion is performed by a mixer MIX explained above, the frequency (ωLO+ωIF) higher by the IF frequency (ωIF) and the frequency (ωLO-ωIF) lower by the IF frequency (ωIF) than the local oscillation frequency (ωLO) are converted into the same IF frequency (ωIF). However, when ωLO-ωIF is a desired RF frequency, an undesired frequency ωLO+ωIF is called an image frequency, and the image frequency is removed.

The frequency conversion unit 201 according to the present arrangement has each component for a plurality of received RF signals. That is, it includes a local oscillator OSC 11, a local oscillator OSC 12, a mixer MIX 11, a mixer MIX 12, a mixer MIX 21, a mixer MIX 22, a phase shifter P/S 11, a phase shifter P/S 12, a first image rejection means IRC 1, and a second image rejection means IRC 2.

The frequency selection unit 202 is configured by a bandpass filter BPF. The frequency selection unit 202 has each component for each of the received RF signals. That is, it includes the BPF 11 and the BPF 21.

The addition unit 204 is configured by the analog signal addition means ADD. According to the present arrangement there is one ADD.

Since it is not necessary for frequency re-conversion unit to reconvert the frequency of 0 Hz, that is, it is not necessary to reconvert the frequency, no re-conversion unit is shown in FIG. 2, which is thus not in accordance with the present invention.

The analog-to-digital conversion unit 3 is configured by one analog-to-digital converter ADC 1.

The digital signal processing unit 4 is configured by a numerically controlled oscillator NCO, two mixers MIX, and demodulation processing means DEC for each of a plurality of the received RF signals. The NCO is an oscillator for generating a sine wave and a cosine wave in a variable period. A mixer MIX is a circuit for performing a frequency conversion by multiplying two signals as explained above. The demodulation processing means DEC is a circuit for demodulating an input signal.

The digital signal processing unit 4 performs a demodulation by separating added signals. Therefore, it includes each component for a plurality of received RF signals. That is, in the present arrangement, it includes the numerically controlled oscillators NCO 1 and NCO 2, the mixers MIX 41 to MIX 44, and the first demodulation processing means DEC 1 and the second demodulation processing means DEC 2.

Next, the connection in the digital signal processing unit 4 and the procedure of processing a signal is explained. The IF signal output via the analog-to-digital conversion unit 3 is input to the four mixers MIX 41 to 44. The mixer MIX 41 and the mixer MIX 42 are connected to the numerically controlled oscillator NCO 1, and performs a frequency conversion of an IF signal. The frequency-converted IF signal is output to the first demodulation processing means DEC 1 and is demodulated. The mixer 43, the mixer MIX 44, the numerically controlled oscillator NCO 2, and the second demodulation processing means DEC 2 similarly demodulate the signal.

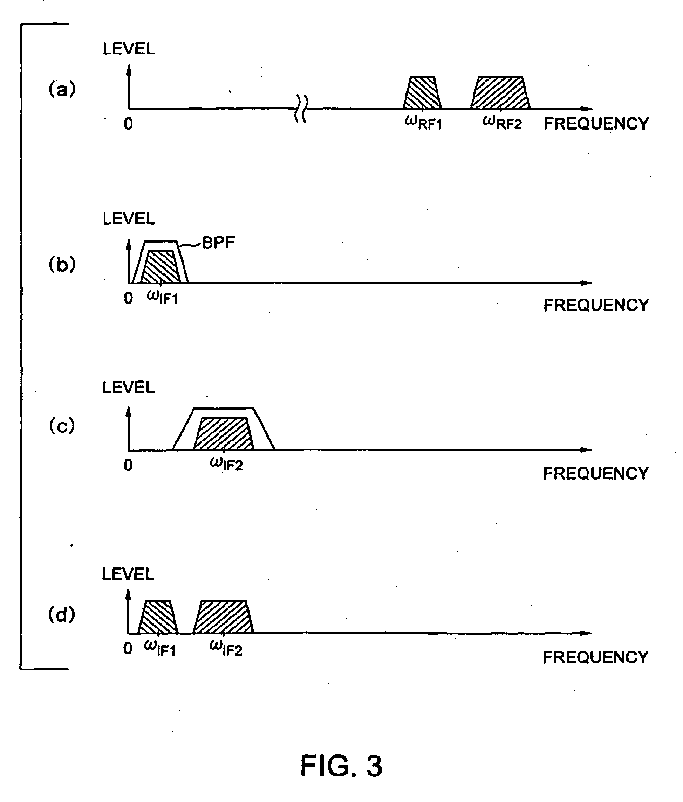

The operation performed when two different signals are received in the communication device according to the present arrangement is explained below. FIG. 3 is a overview of a signal by the analog signal processing unit 2. The two input RF signals from an antenna have the center frequencies ωRF1 and ωRF2.

These two RF signals are passed to the bandpass filter BPF 1 or BPF 2 to select a frequency band by the front-end unit 1, and a signal other than a desired frequency band is removed. Each of the two RF signals is sufficiently amplified by the low noise filter LNA 1 or LNA 2, and output to the analog signal processing unit 2. Part (a) of FIG. 3 shows the signal input to the front-end unit 1.

Next, the signal output from the front-end unit 1 is input to the analog signal processing unit 2. The two input signals are down converted by the mixer MIX to the Low-IF band (center frequency -IF1, -IF2), and image-rejected by the image rejected circuit IRC (unnecessary frequency component is rejected). Thus the signals of the I component and the Q component of the two input signals are generated in the frequency conversion unit 201.

Parts (b) and (c) of FIG. 3 show the respective down converted signals. As shown in parts (b) and (c) of FIGS. 3, the down conversion is performed such that the two signal bands shown by part (a) of FIG. 3 cannot overlap as shown in parts (b) and (c) of FIG. 3.

There are interference waves surrounding signals shown in parts (b) and (c) of FIG. 3. The bandpass filter BPF of the frequency selection unit 202 rejects interference waves by an adjacent channel signal, etc. shown in parts (b) and (c) of FIG. 3. The two RF signals processed in parallel are added by the addition unit 204 (analog signal addition mean ADD), and output to the analog-to-digital conversion unit 3. Part (d) of FIG.3 shows the signal (Low-IF signal) after the addition.

The added Low-IF signal is converted to a digital signal by the ADC. The signal converted to digital data is separated into two signals by the digital signal processing unit 4.

The digital signal processing unit 4 multiplies these signals by the signal generated by the NCO and separated into the I component and the Q component. The demodulation processing means performs the synchronization, equalization, decoding, etc., on the signal separated into the I component and the Q component and a desired signal is retrieved.

According to the present arrangement, when a plurality of RF signals in the multi-band and multi-mode are received, a plurality of RF signals are down converted to different intermediate frequencies IF (intermediate frequency), and the plurality of down converted signals are added as one signal, it is necessary to provide only one ADC in the analog-to-digital conversion unit of the communication device. Since the sampling frequency of the ADC requires at least two times the input signal frequency band, and, relating to the resolution (number of bits), the dynamic range of a signal increases when an input signal band increases, a higher resolution is required. Therefore, the sampling frequency and the resolution of the required ADC becomes higher, and the difficulty in implementation rises. However, since the number of required ADC is one, the circuit can be shared, the area and the number of parts are reduced, and a smaller and less expensive communication device can be realized. Furthermore, the power consumption can be lower.

In the present arrangement, an image rejection circuit having a large image rejection ratio and a channel selection filter at an IF stage are required, but the present arrangement is effective in a communication device for processing a multi-band and multi-mode signal having not so specifically severe image rejection specification as the Bluetooth and having narrow bandwidth, and realizes a smaller device with lower power consumption.

### (Second embodiment)

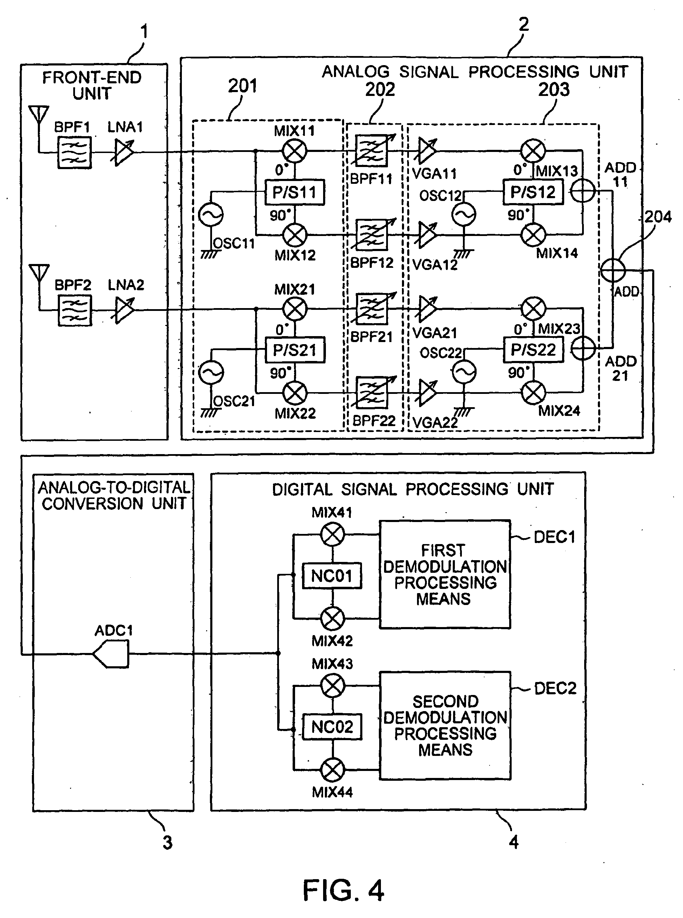

FIG. 4 is a block diagram of the second embodiment of the present invention.

The present embodiment with an analog signal processing unit uses a direct conversion system in which it is not necessary to reject an image, temporarily down converts a center frequency of a signal to a direct current signal (hereinafter referred to as a DC) and selects a channel at the B/B (baseband), adds up-converted signals after channel selection, and then outputs the result to the analog-to-digital conversion unit. The channel selection refers to selecting a desired channel from a plurality of channels in the signal band and rejecting other channels.

In FIG. 4, the components also shown in FIGS. 1 and 2 are assigned the same reference numerals, and the explanation of the components is omitted, and only the differences are explained here. Thus, by directly down converting to a baseband signal, an unnecessary frequency component (image) does not occur. Therefore, in the present embodiment, no image rejection means IRC is required.

The front-end unit 1 is the same in structure as in the arrangement of FIG. 2, and the explanation is omitted here.

Each component of the analog signal processing unit 2 is explained below.

The analog signal processing unit 2 has the frequency conversion unit 201, the frequency selection unit 202, the frequency re-conversion unit 203, and the addition unit 204.

The frequency conversion unit 201 according to the present embodiment does not require the image rejection means ISC as described above, and is the same in structure as the unit shown in FIG. 2 except the first image rejection means ISC 1 and the second image rejection means ISC 2. In the frequency conversion unit 201, the I components or the Q components output from the mixer MIX 11, MIX 12, MIX 21, and MIX 22 are output as they are to the frequency selection unit 202.

The frequency selection unit 202 is provided with a bandpass filter BPF for each of the I component or the Q component generated by the frequency conversion unit 201. That is, the present embodiment includes four bandpass filters BPF of the bandpass filter BPF 11 connected to the mixer MIX 11, the bandpass filter BPF 12 connected to the mixer MIX 12, the bandpass filter BPF 21 connected to the mixer MIX 21, and the bandpass filter BPF 22 connected to the mixer MIX 22. In the present embodiment, BPF 11, BPF 12, BPF 21, BPF 22 are the bandpass filters, but they can be the low pass filters.

The frequency re-conversion unit 203 is configured by two variable gain amplifiers VGA, two mixers MIX for up version, a phase shifter P/S, a local oscillator OSC, and an adder ADD for a signal containing a set of an I component and a Q component output from the frequency selection unit 202. The VGA is an amplifier capable of varying the amplitude (gain) of an input signal. The frequency re-conversion unit 203 has each component for each RF signal. The frequency re-conversion unit 203 has the variable gain amplifiers VGA 11, VGA 12, VGA 21, and VGA 22, the mixers MIX 13, MIX14, MIX 23, and MIX 24 for up version, the phase shifters P/S 12 and P/S 13, and adders ADD 11 and ADD 21.

The connection in the frequency re-conversion unit 203 is explained below. First, the local oscillator OSC is connected to the phase shifter P/S. The phase shifter P/S is connected to each of the two mixers MIX. The phase shifter P/S generates a 0° phase-shifted sine wave and a 90° phase-shifted cosine wave based on the sine wave input from the local oscillator OSC, and provides them for two mixers MIX.

The I component or the Q component output from the frequency selection unit 202 is input to each of the two mixers MIX aside from the phase shifters P/S. Each of the two mixers MIX frequency-converts (up converts) the input I component or Q component using a sine wave or a cosine wave input from the phase shifter P/S.

At this time, according to the present embodiment, the two RF signals are up converted such that the signal bands cannot overlap each other. That is, the local oscillators OSC 12 and OSC 22 have different oscillation frequencies.

An adder ADD is connected to the two mixers MIX, the I component and the Q component are added, and the result is output to the addition unit 204.

The addition unit 204, the analog-to-digital conversion unit 3, and the digital signal processing unit 4 are the same in structure as those shown in FIG. 2, and the explanation is omitted here.

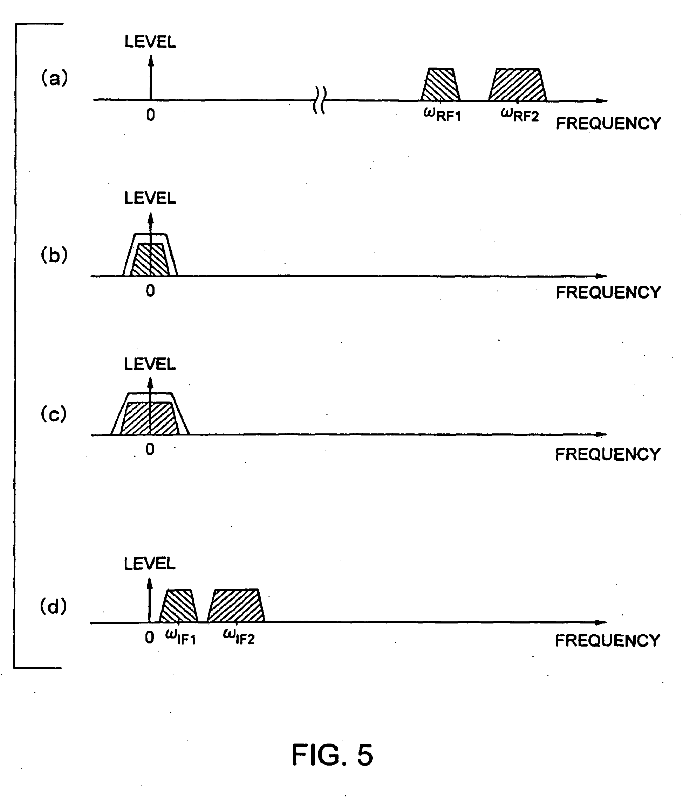

Next, the operation performed when two different signals are received in the communication device according to the present embodiment is explained below. FIG. 5 shows the outline of the signal in the analog signal processing unit 2. Part (a) of FIG. 5 shows two RF signals input to the front-end processing unit 2, and the center frequencies are defined as ωRF1 and ωRF2.

In the frequency conversion unit 201, the two RF signals shown in part (a) of FIG. 5 are down converted to the DC and separated into the signals of the I/Q components by the mixer MIX. Parts (b) and (c) of FIG. 5 show the respectively down converted signals. In the frequency selection unit 202, a channel is selected at the B/B (baseband). In the B/B, a filter with sharp frequency characteristic sufficient enough to reject adjacent channel signals can be generated easily. Thus the channel selectivity can be better than in the first embodiment.

Next, the frequency re-conversion unit 203 up converts the signals in the Low-IF area into the signals having different center frequencies ωIF1 and ωIF2 such that the two signal bands do not overlap each other. Then, the addition unit 204 performs an addition, and the result is output to the analog-to-digital conversion unit 3. Part (d) of FIG. 5 shows a signal added after the up conversion.

The signal output from the analog signal processing unit 2 is A/D converted by the analog-to-digital conversion unit 3, and the digital signal processing unit 4 performs the demodulation, etc. and retrieves a desired signal.

Thus, a signal obtained after the down conversion to the DC and selecting a channel is then up converted and A/D converted collectively for both signals, thereby improving the channel selection performance, reducing the ADC as compared with the conventional technology, and realizing a smaller and lower-power-consumption communication device.

In the present embodiment when a plurality of RF signals in the multi-band and multi-mode are received, the plurality of RF signals are down converted to the DC, and then up converted to different IFs and a plurality of signals are added. Therefore, no image rejection filter or channel selection filter at the IF stage is required. Additionally, the number of ADCs in the analog-to-digital conversion unit can be reduced.

### (Third embodiment)

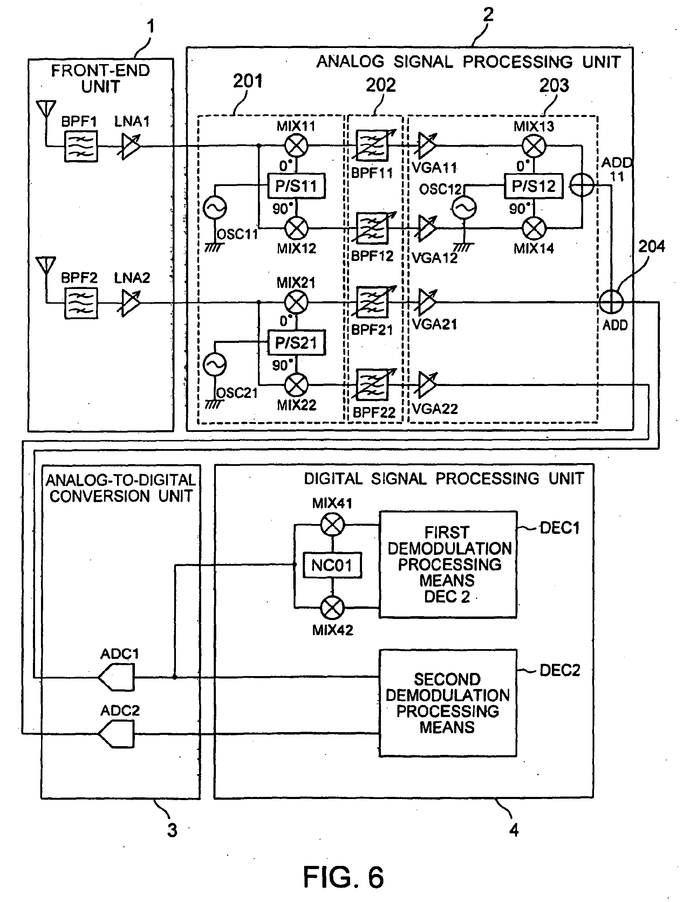

FIG. 6 is a block diagram of the communication device according to the third embodiment of the present invention. In the present embodiment, the analog signal processing unit 2 down converts a multi-band and multi-mode signal once to the DC, and up converts only a part of the plurality of channel-selected signals. The same components also shown in FIG. 4 are assigned the same reference numerals, and the explanation is omitted. Only the different portions are described below.

The present embodiment is different from the second embodiment in the frequency re-conversion unit 203 and the addition unit 204 of the analog signal processing unit 2 and in the number of ADCs configuring the analog-to-digital conversion unit 3. The digital signal processing unit 4 is different in the configuration depending on the output of the analog-to-digital conversion unit 3.

The front-end unit 1 and the frequency conversion unit 201 and the frequency selection unit 202 of the analog signal processing unit 2 are the same in structure as those in the second embodiment, and the explanation is omitted here.

In the frequency re-conversion unit 203, the portion for processing one RF signal is configured by a variable gain amplifier VGA, a local oscillator OSC, a phase shifter P/S, a mixer MIX for up conversion, and the adder ADD 11, and the portion for processing the other RF signal is configured by a variable gain amplifier VGA. That is, the frequency re-conversion unit 203 has the variable gain amplifiers VGA 11, VGA 12, VGA 21, and VGA 22, the local oscillator OSC 12, the mixers MIX 13 and MIX 14, for up conversion, the phase shifter P/S 12, and the adder ADD 11.

Furthermore, the addition unit 204 is configured by an analog signal addition mean ADD for adding an output signal of the adder ADD 11 and the other IF signal (of I component) output from the variable gain amplifier VGA 21 of the frequency re-conversion unit 203.

The analog-to-digital conversion unit 3 is configured by an ADC 1 for A/D converting a signal output from the addition unit 204, and an ADC 2 for A/D converting the other IF signal (of Q component) output from the variable gain amplifier VGA 22 of the frequency re-conversion unit 203.

The digital signal processing unit 4 has the configuration of down converting a signal output from the ADC 1, and output to the first demodulation processing means DEC 1 after the down conversion. The signal output from the ADC 2 is input to the second demodulation processing means DEC 2.

That is, the present embodiment includes the numerically controlled oscillator NCO 1, the mixer MIX 41, the mixer MIX 42, the first demodulation processing means DEC 1, and the second demodulation processing means DEC 2. In the present embodiment, the signal output from the ADC 1 is input to the mixer MIX 41, the mixer MIX 42, and the second demodulation processing means DEC 2. The signal output from the ADC 2 is input to the second demodulation processing means DEC 2. The mixer MIX 41, the mixer MIX 42, the numerically controlled oscillator NCO 1, and the first demodulation means DEC 1 perform the demodulation in the operation similar to the operation according to the second embodiment while the second demodulation processing means DEC 2 performs the demodulation without a frequency conversion.

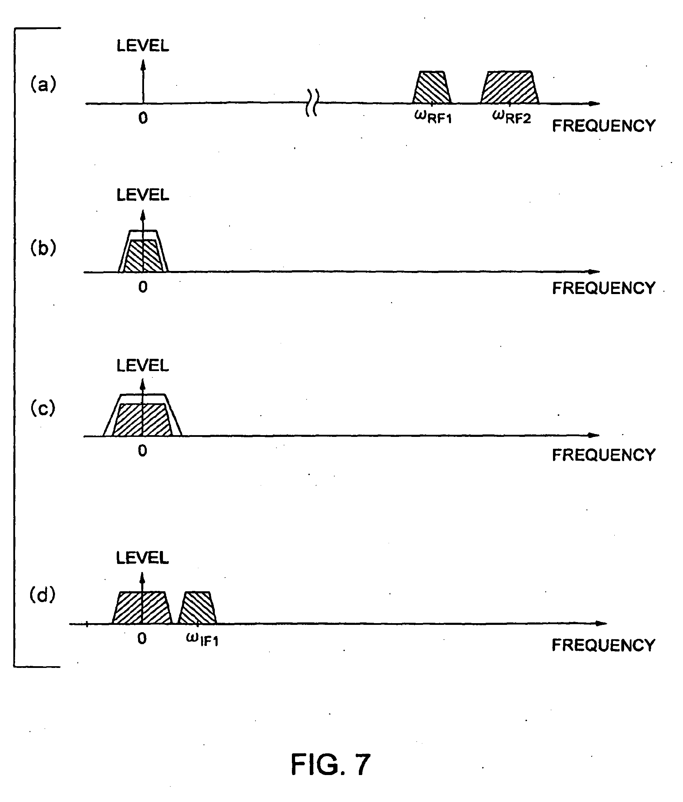

Next, the operation performed when two different signals are received in the communication device of the present embodiment is explained below. FIG. 7 shows the outline of the signal in the analog signal processing unit 2. Part (a) of FIG. 7 shows RF signals input to the front-end unit 1, and have the center frequencies ωRF1 and ωRF2. The two RF signals are down converted to the DC, and channel-selected. Parts (b) and (c) of FIG. 7 show the signals after the down conversion.

One signal (center frequency ωRF1) is up converted in the frequency re-conversion unit 203 and the I/Q components are added. The signal is added to the I component of the other signal (center frequency ωRF1) by the addition unit 204. The analog signal processing unit 2 outputs the output signal of the addition unit 204 and the signal of the Q component of the other signal.

Thus, after the down conversion, only one signal is up converted to Low-IF, and a part of the signal is added as separated as the I/Q signal, thereby increasing the number of ADCs as compared with the second embodiment. However, as compared with the case where it is up converted and A/D converted, the sampling rate can be reduced, and the number of mixers MIX for up converting can be reduced.

In the present embodiment, the RF signal having the center frequency ωRF1 is once down converted to the DC, and then up converted to Low-IF. Also, the RF signal can be down converted directly to Low-IF without via the DC. When the RF signal is down converted directly to LowIF, a part of the arrangement of FIG. 2 can be applied to the present embodiment.

In the present embodiment, BPF 11, BPF 12, BPF 21, BPF 22 are the bandpass filters, but they can be the low pass filters.

### (Fourth embodiment)

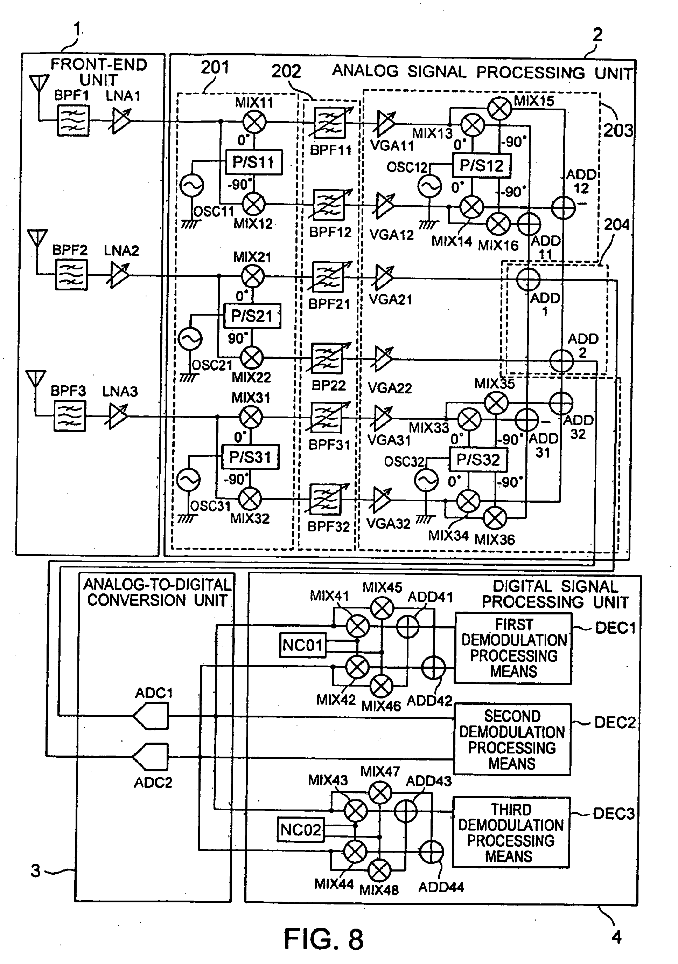

FIG. 8 is a block diagram of the communication device according to the fourth embodiment of the present invention. In the present embodiment, three different types of RF signals are received and down converted to the DC, and then a part of a plurality of signals which have been channel-selected are up converted by a complex mixers. The same components also shown in FIG. 6 are assigned the same reference numerals, and the explanation of the components is omitted here. Only the different portions are described below.

The front-end unit 1 has an antenna, a bandpass filter BPF, and a low noise amplifier LNA. In the present embodiment, the front-end unit 1 has the antenna 1, the antenna 2, the antenna 3, the bandpass filters BPF 1, BPF 2, and BPF 3, and the low noise amplifiers LNA 1, LNA 2, and LNA 3.

There are three sets of components in the frequency conversion unit 201, each for respective received RF signal. That is, it includes the local oscillator OSC 11, the local oscillator OSC 21, the local oscillator OSC 31, mixer MIX 11, the mixer MIX 21, the mixer MIX 22, the mixer MIX 31, the mixer MIX 32, and the phase shifter P/S 11, the phase shifter P/S 21, and the phase shifter P/S 31.

The frequency selection unit 202 is configured by the bandpass filter BPF. There are three sets of component in the frequency selection unit 202, each for respective received RF signal. That is, it has the BPF 11, the BPF 12, the BPF 21, the BPF 22, the BPF 31, and the BPF 32. In the present embodiment, BPF 11, BPF 12, BPF 21, BPF 22, BPF 31, BPF 32 are the bandpass filters, but they can be the low pass filters.

The frequency re-conversion unit 203 is provided with a complex mixer MIX in the process path for a part of RF signals' demodulation process. That is, the frequency re-conversion unit 203 according to the present embodiment has the variable gain amplifiers VGA 11, VGA 12, VGA 21, VGA 22, VGA 31, and VGA 32, the local oscillators OSC 12 and OSC 32, the complex mixers MIX 13, MIX 14, MIX 15, MIX 16, MIX 33, MIX 34, MIX 35, and MIX 36, the phase shifters P/S 12 and P/S 32, and the adders ADD 11, ADD 12, ADD 31, and ADD 32. The addition unit 204 has the adders ADD 1 and ADD 2 for each of the I/Q components.

The analog-to-digital conversion unit 3 has two ADCs. The digital signal processing unit 4 has a complex mixer MIX for down converting again the signal in the path of demodulating the signal up converted by the complex mixer. That is, the present embodiment has the numerically controlled oscillators NCO 1 and NCO 2, the complex mixers MIX 41, MIX 42, MIX 43, MIX 44, MIX 45, MIX 46, MIX 47, and MIX 48, the adders ADD 41, ADD 42, ADD 43, and ADD 44, the first demodulation processing means DEC 1, the second demodulation processing means DEC 2, and the third demodulation processing means DEC 3.

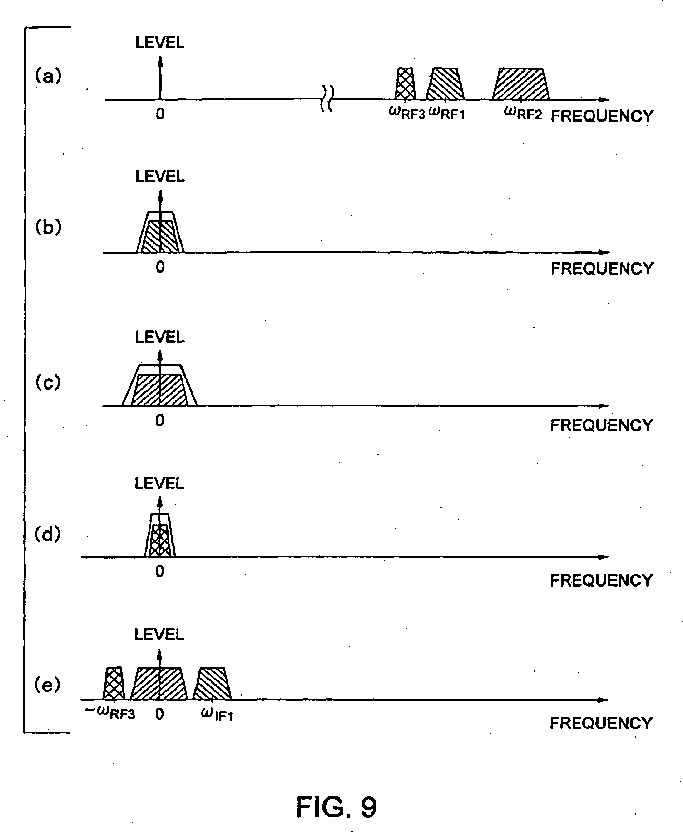

The operation performed when three different signals are received in the communication device according to the present embodiment is explained below. FIG. 9 shows the outline of the signal in the analog signal processing unit 2. Part (a) of FIG. 9 shows three RF signals having the center frequencies ωRF1, wRF2, and wRF3. The three RF signals are down converted to the DC by the frequency conversion unit 201, and channel-selected at the B/B(baseband) in the frequency selection unit 202. Parts (b) to (d) of FIG. 9 show down converted signals.

Next, a complex mixer MIX is used in the frequency re-conversion unit 203 for the two signals having the center frequencies ωRF1 and ωRF3, and up converted to the positive and negative frequencies. The addition unit 204 adds the I/Q components and outputs the result. Part (e) of FIG. 9 shows the signal added after up converting. The resultant signal is A/D converted, separated into each signal components, and demodulated.

According to the present embodiment, a part of the signal obtained by down converting the RF signal in the B/B (baseband) is up converted to the positive and negative Low-IF by the complex mixer MIX. A similar concept is applied to the next process that the I/Q components are output when the RF signal is down converted to the Low-IF, and down converted from the RF band directly to the positive and negative Low-IF bands.

### (Fifth embodiment)

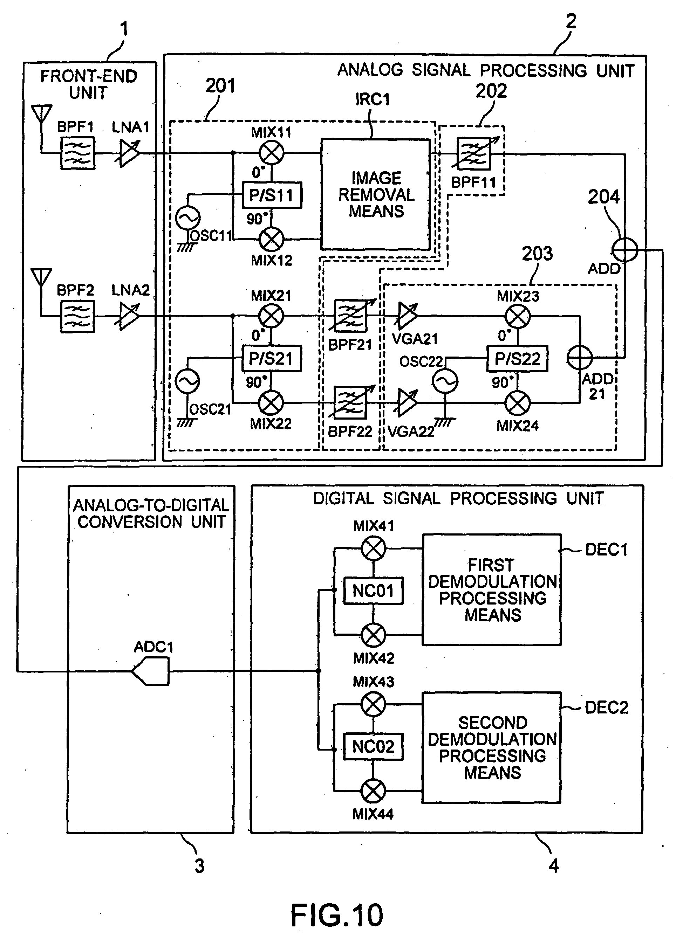

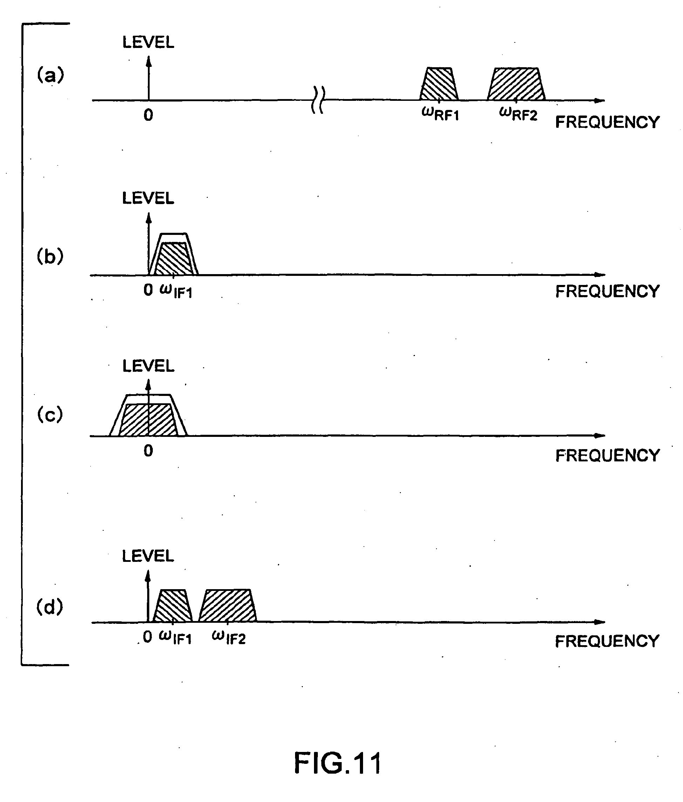

FIG. 10 is a block diagram of the communication device according to the fifth embodiment. In the present embodiment for embodying the present invention, the method (parts (a), (b), and (d) in FIG. 11) of the arrangement of FIG. 2 of down converting an RF signal to Low-IF and the method (parts (a), (c), and (d) in FIG. 11) of the second embodiment of up converting the signal to the Low-IF in the re-conversion after down converting the signal to the DC are combined.

For a signal according to reduced image rejection specifications, an analog signal is processed in the method according to the arrangement of FIG. 2. For a signal not containing the DC component in the B/B, an analog signal is processed in the method according to the second embodiment. It is difficult to down convert a signal having a broad band from the RF band directly to the Low-IF band. However, the sampling at the Low-IF can be easily performed while enhancing the channel selection by once up converting to the Low-IF after once down converting it to the DC.

In FIG. 10, the same components also shown in FIGS. 2 and 4 are assigned the same reference numerals, the explanation is omitted, but different portions are explained below.

The front-end unit 1, the analog-to-digital conversion unit 3, and the digital signal processing unit 4 are the same as those in the arrangement of FIG. 2 and the second embodiment, and the explanation is omitted.

Each configuration of the analog signal processing unit 2 is explained below.

The analog signal processing unit 2 has the frequency conversion unit 201, the frequency selection unit 202, the frequency re-conversion unit 203, and the addition unit 204.

The frequency conversion unit 201 of the present embodiment is provided with the image rejection circuit IRC 1 for one of the two received RF signals, but is not provided with the image rejection means for the other RF signal. Furthermore, the process for one RF signal is not provided with a frequency re-conversion unit while the process for the other RF signal is provided with the frequency re-conversion unit 203.

Next, the operation performed when two different signals are received in the communication device according to the present embodiment is explained below. FIG. 11 shows the outline of the signal in the analog signal processing unit 2. Part (a) of FIG. 11 shows two different RF signals input to the analog signal processing unit 2, and their center frequencies are ωRF1 and ωRF2.

In the present embodiment, the DC down converted signal (part (c) of FIG. 11) is up converted such that the signal bands cannot overlap from the center frequency ωIF1 to center frequency ωIF2, thereby reducing the number of ADCs. By adding the two signals (part (d) of FIG. 11), one ADC can perform the conversion to digital data. After down converting to the B/B in the digital signal processing unit, the demodulation is performed.

According to the present embodiment, a smaller communication device can be realized by using the receiving system appropriate for each of the multi-band and multi-mode signals. Additionally, the number of necessary ADCs can be reduced by rearranging the multi-band and multi-mode signals to the Low-IF and collectively A/D converting them.

In the present embodiment, BPF 11, BPF 21, BPF 22 are the bandpass filters, but they can be the low pass filters.

### (Sixth embodiment)

As in the fifth embodiment, the sixth embodiment is a combination of a method of down converting the RF signal to the Low-IF on three different RF signals and a method of up converting the signal to the Low-IF by the re-conversion after the down conversion to the DC. Furthermore, the center frequency ωIF is determined as the position of up converting a signal based on the band of the RF signal.

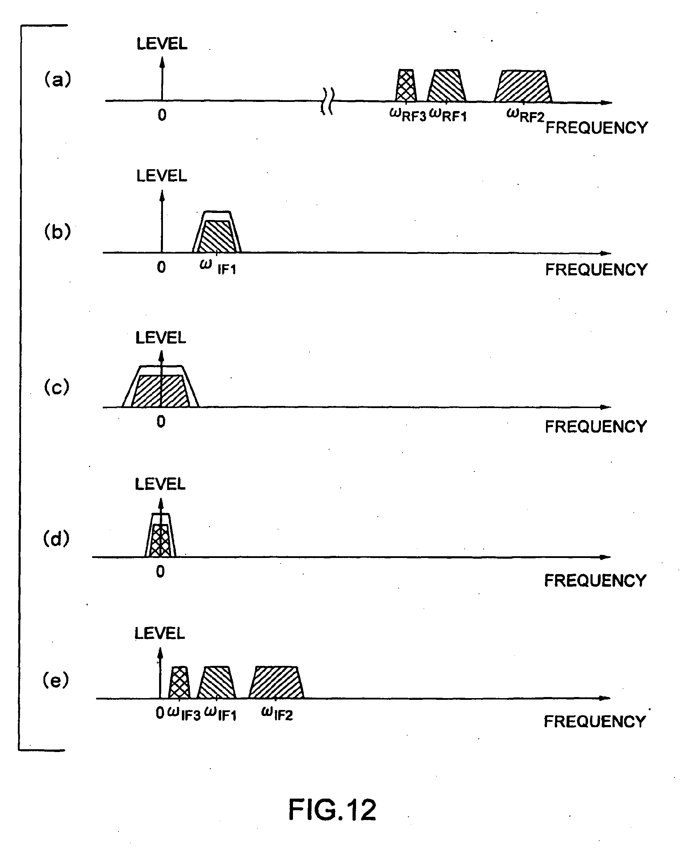

FIG. 12 shows the outline of the signal processing according to the present embodiment. The three RF signals are defined as center frequencies ωRF1, ωRF2, and ωRF3. Assuming that the center frequency of the RF signal of the center frequency ωRF1 is about 2 MHz, and the signal band widths of the center frequencies ωRF1, ωRF2, and ωRF3 are respectively 1 MHz, 20 MHz, and 500 kHz (part (a) of FIG. 12). The RF signal of the center frequency ωRF1 is down converted to Low-IF (part (b) of FIG. 12). The RF signals of the center frequencies ωRF2 and ωRF3 are down converted to the DC (parts (c) and (d) of FIG. 12).

Part (e) of FIG. 12 shows the status of up converting the signal down converted to the DC (part (c) of FIG. 12). As shown in part (e) of FIG. 12, the center frequencies ωIF1, ωIF2, and ωIF3 are determined such that the band widths can be arranged in the order of 500 kHz, 1 MHz, and 20 MHz from the low frequency side.

Since the band , widths at the center frequencies ωIF1, ωIF2, and ωIF3 are 1 MHz, 20 MHz, and 500 kHz, the signals of the center frequency ωIF2 cannot be arranged at the low band side of the center frequency ωIF1, and when the signal of the center frequency ωIF3 is arranged at the high frequency side of the center frequency ωIF1, the band around 0 to 1 MHz cannot be used.

According to the present embodiment, by optimally arranging the center frequency in down conversion and up conversion, the frequency band can be effectively used, and the sampling frequency of the ADC at the subsequent stage can be reduced.

### (Seventh embodiment)

The seventh embodiment is applied to a MIMO receiver and a diversity receiver. In the above-mentioned embodiments, a receiver of a multi-band and multi-mode signal has been mainly explained, but the similar concept can be applied to the MIMO receiver, etc. and a similar effect can be attained.

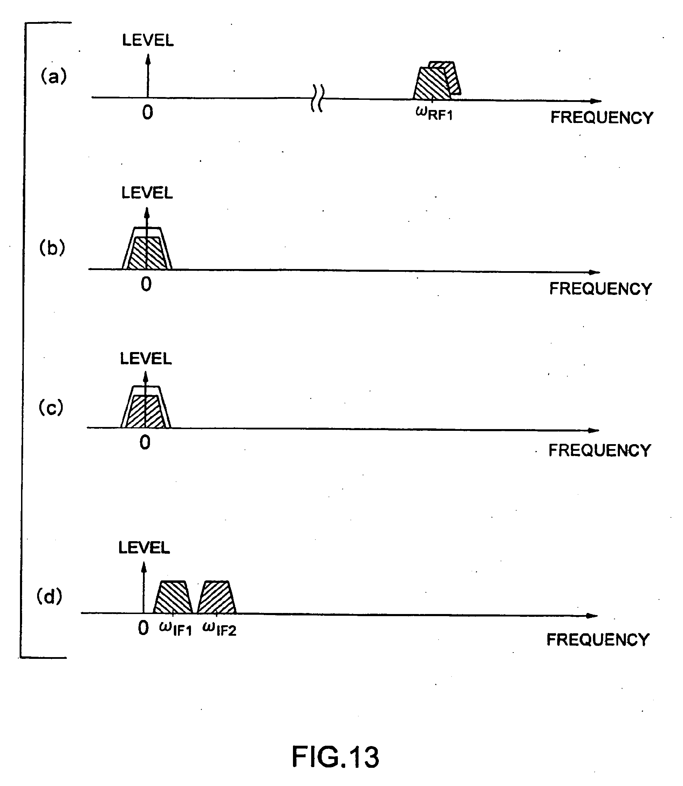

FIG. 13 shows the process of frequency conversion, on two signals which have different amplitude-characteristics or phase-characteristics each other and have been passed through different communication paths. The two received signals (part (a) of FIG. 13) is down converted to the DC, and the channel selected at the B/B (parts (b) and (c) of FIG. 13). Then, the signals are up converted to the Low-IF having the different center frequencies ωIF1 and ωIF2 (part (d) of FIG. 13).

Afterwards, by collectively performing the A/D conversion after adding the signals, a necessary ADC can be reduced, and a smaller communication device of lower power consumption can be realized.

The above-mentioned embodiments are examples, and the present invention is not limited to those.

The present embodiments can be applied not only to a communication device for wireless communication, but also to be a communication device for cable communication.

## Claims

1. An analog signal processing circuit, comprising:
a frequency conversion unit (201) for converting frequencies of a plurality of radio frequency signals having different center frequencies or a plurality of radio frequency signals having the same center frequencies but different amplitude-characteristics or phase-characteristics;
a frequency selection unit (202) for selecting a signal output from the frequency conversion unit (201) at a predetermined band width; and
an addition unit (204) for adding a plurality of signals output from the frequency selection unit (202), and **characterized by**
a frequency re-conversion unit (203) for converting a part or all of signal frequencies in the plurality of signals output from the frequency selection unit (202), wherein
the addition unit (204) is adapted to add a plurality of signals output from the frequency re-conversion unit (203).

2. The analog signal processing circuit according to claim 1, wherein
the frequency conversion unit (201) is adapted to convert center frequencies of the plurality of radio frequency signals to desired frequencies of a half or more of the radio frequency signals' signal band widths.

3. The analog signal processing circuit according to claim 1, wherein:
the frequency conversion unit (201) is adapted to convert a frequency such that a center frequencies of the plurality of radio frequency signals can be direct current signals; and
the frequency re-conversion unit (203) is adapted to re-convert all the plurality of signals such that the center frequencies can be desired frequencies of half or more signal band widths.

4. The analog signal processing circuit according to claim 1, wherein:
the frequency conversion unit (201) is adapted to convert a frequency such that the center frequencies of the plurality of radio frequency signals can be direct current signals; and
the frequency re-conversion unit (203) is adapted to re-convert a part of the plurality of signals such that the center frequencies can be desired frequencies of half or more signal band widths.

5. The analog signal processing circuit according to claim 1, wherein:
the frequency conversion unit (201) is adapted to convert a frequency such that a center frequency of a first signal can be a desired frequency of halt or more signal band width, and a center frequency of a second signal can be a direct current signal; and
the frequency re-conversion unit (203) is adapted to re-convert a frequency such that a center frequency of a second signal can be a desired frequency of half or more signal band width.

6. The analog signal processing circuit according to one of claims 1-5, wherein
the frequency conversion unit (201) has a mixer (MIX11, 12), a phase-shifter (P/S11), a local oscillator (OSC11), and an image rejection circuit (IRC1).

7. The analog signal processing circuit according to one of claims 1-5, wherein
the frequency conversion unit (201) has a mixer (MIX11, 12), a phase-shifter (P/S11), and a local oscillator (OSC11).

8. The analog signal processing circuit according to one of claims 1-7, wherein
the frequency selection unit (202) is formed by a bandpass filter (BPF11) or a low pass fitter.

9. The analog signal processing circuit according to one of claims 1-8, wherein
the frequency re-conversion unit (203) has a variable gain amplifier (VGA11), a mixer (MIX13, 14) for up conversion, a phase-shifter (P/S12), a local oscillator (OSC12), and an adder (ADD11).

10. A communication device, comprising:
a front-end unit (1) for receiving a plurality of radio frequency signals having different center frequencies or a plurality of radio frequency signals having the same center frequencies but different amplitude- characteristics or phase-characteristics,
an analog signal processing unit (2) for converting the plurality of radio frequency signals to a desired band,
an analog-to-digital conversion unit (3) for converting an analog signal output from the analog signal processing unit (2) into a digital signal, and
a digital signal processing unit (4) for demodulating the digital signal to a desired digital data, wherein
the analog signal processing unit (2) comprises:
a frequency conversion unit (201) for converting the frequencies of the plurality of radio frequency signals;
a frequency selection unit (202) for selecting a signal output from the frequency conversion unit at a predetermined band width; and
an addition unit (204) for adding the plurality of signals output from the frequency selection unit, and **characterized in that**
the analog signal processing unit (2) further comprises a frequency re-conversion unit (203) for converting a part or all of signal frequencies in the plurality of signals output from the frequency selection unit; and
the addition unit (204) is adapted to add a plurality of signals output from the frequency re-conversion unit (203).

11. The communication device according to claim 10, wherein
the frequency conversion unit (201) is adapted to convert center frequencies of the plurality of radio frequency signals to desired frequencies of a half or more of the radio frequency signals' signal band widths.

12. The communication device according to claim 10, wherein:
the frequency conversion unit (201) is adapted to convert a frequency such that center frequencies of the plurality of radio frequency signals can be direct current signals; and
the frequency re-conversion unit (203) is adapted to re-convert all the plurality of signals such that the center frequencies can be desired frequencies of half or more signal band widths.

13. The communication device according to claim 10, wherein:
the frequency conversion unit (201) is adapted to convert a frequency such that the center frequencies of the plurality of radio frequency signals can be direct current signals; and
the frequency re-conversion unit (203) is adapted to re-convert a part of the plurality of signals such that the center frequencies can be desired frequencies of half or more signal band widths.

14. The communication device according to claim 10, wherein:
the frequency conversion unit (201) is adapted to convert a frequency such that a center frequency of a first signal can be a desired frequency of half or more signal band width, and a center frequency of a second signal can be a direct current signal; and
the frequency re-conversion unit (203) is adapted to re-convert a frequency such that a center frequency of the second signal can be a desired frequency of half or more signal band width.

15. The communication device according to one of claims 10-14, wherein
the frequency conversion unit (201) has a mixer (MIX11, 12), a phase-shifter (P/S11), a local oscillator (OSC11), and an image rejection circuit (IRC1).

16. The communication device according to any one of claims 10-14, wherein
the frequency conversion unit (201) has a mixer (MIX11, 12), a phase-shifter (P/S11), and a local oscillator (OSC11).

17. The communication device according to one of claims 10-16, wherein
the frequency selection unit (202) is formed by a bandpass filter (BPF11) or a low pass filter.

18. The communication device according to one of claims 10-17, wherein
the frequency re-conversion unit (203) has a variable gain amplifier (VGA11), a mixer (MIX13, 14) for up conversion, a phase-shifter (P/S12), a local oscillator(OSC12), and an adder (ADD11).

## Patentansprüche

1. Analogsignalverarbeitungsschaltung, mit:
einer Frequenzumwandlungseinheit (201) zum Umwandeln von Frequenzen einer Vielzahl von Funkfrequenzsignalen mit unterschiedlichen Mittenfrequenzen oder einer Vielzahl von Funkfrequenzsignalen mit den gleichen Mittenfrequenzen jedoch unterschiedlichen Amplitudeneigenschaften oder Phaseneigenschaften;
einer Frequenzauswahleinheit (202) zum Auswählen eines Signals, das von der Frequenzumwandlungseinheit (201) bei einer vorbestimmten Bandbreite ausgegeben wird; und
einer Additionseinheit (204) zum Addieren einer Vielzahl von Signalen, die von der Frequenzauswahleinheit (202) ausgegeben werden, und **gekennzeichnet durch**
eine Frequenzneuumwandlungseinheit (203) zum Umwandeln eines Teiles oder aller Signalfrequenzen in der Vielzahl von Signalen, die von der Frequenzauswahleinheit (202) ausgegeben werden, wobei
die Additionseinheit (204) angepasst ist, eine Vielzahl von Signalen zu addieren, die von der Frequenzneuumwandlungseinheit (203) ausgegeben werden.

2. Analogsignalverarbeitungsschaltung nach Anspruch 1, wobei die Frequenzumwandlungseinheit (201) angepasst ist, Mittenfrequenzen der Vielzahl von Funkfrequenzsignalen in gewünschte Frequenzen einer Hälfte oder mehr der Signalbandbreiten der Funkfrequenzsignale umzuwandeln.

3. Analogsignalverarbeitungsschaltung nach Anspruch 1, wobei:
die Frequenzumwandlungseinheit (201) angepasst ist, eine Frequenz derart umzuwandeln, dass Mittenfrequenzen der Vielzahl von Funkfrequenzsignalen Gleichstromsignale sein können; und
die Frequenzneuumwandlungseinheit (203) angepasst ist, die gesamte Vielzahl von Signalen derart neu umzuwandeln, dass die Mittenfrequenzen gewünschte Frequenzen von der Hälfte oder mehr Signalbandbreiten sein können.

4. Analogsignalverarbeitungsschaltung nach Anspruch 1, wobei:
die Frequenzumwandlungseinheit (201) angepasst ist, eine Frequenz derart umzuwandeln, dass die Mittenfrequenzen der Vielzahl von Funkfrequenzsignalen Gleichstromsignale sein können; und
die Frequenzneuumwandlungseinheit (203) angepasst ist, einen Teil der Vielzahl von Signalen derart neu umzuwandeln, dass die Mittenfrequenzen gewünschte Frequenzen von einer Hälfte oder mehr Signalbandbreiten sein können.

5. Analogsignalverarbeitungsschaltung nach Anspruch 1, wobei:
die Frequenzumwandlungseinheit (201) angepasst ist, eine Frequenz derart umzuwandeln, dass eine Mittenfrequenz eines ersten Signals eine gewünschte Frequenz von einer Hälfte oder mehr Signalbandbreite sein kann und eine Mittenfrequenz eines zweiten Signals ein Gleichstromsignal sein kann; und
die Frequenzneuumwandlungseinheit (203) angepasst ist, eine Frequenz derart neu umzuwandeln, dass eine Mittenfrequenz eines zweiten Signals eine gewünschte Frequenz von einer Hälfte oder mehr Signalbandbreite sein kann.

6. Analogsignalverarbeitungsschaltung nach einem der Ansprüche 1 bis 5, wobei
die Frequenzumwandlungseinheit (201) einen Mischer (MIX11, 12), einen Phasenschieber (P/S11), einen lokalen Oszillator (OSC11) und eine Bildabeisungsschaltung (Image Rejection Circuit)(IRC1) aufweist.

7. Analogsignalverarbeitungsschaltung nach einem der Ansprüche 1 bis 5, wobei
die Frequenzumwandlungseinheit (201) einen Mischer (MIX11, 12), einen Phasenschieber (P/S11), und einen lokalen Oszillator (OSC11) aufweist.

8. Analogsignalverarbeitungsschaltung nach einem der Ansprüche 1 bis 7, wobei
die Frequenzauswahleinheit (202) von einem Bandpassfilter (BPF11) oder einem Tiefpassfilter gebildet wird.

9. Analogsignalverarbeitungsschaltung nach einem der Ansprüche 1 bis 8, wobei
die Frequenzneuumwandlungseinheit (203) einen Verstärker mit variabler Verstärkung (VGA11), einen Mischer (MIX13, 14) für eine Heraufumwandlung, einen Phasenschieber (P/S12), einen lokalen Oszillator (OSC12) und einen Addierer (ADD11) aufweist.

10. Kommunikationsgerät, mit:
einer Vorderseiteneinheit (1) zum Empfangen einer Vielzahl von Funkfrequenzsignalen mit unterschiedlichen Mittenfrequenzen oder einer Vielzahl von Funkfrequenzsignalen mit den gleichen Mittenfrequenzen jedoch unterschiedlichen Amplitudeneigenschaften oder Phaseneigenschaften,
einer Analogsignalverarbeitungseinheit (2) zum Umwandeln der Vielzahl von Funkfrequenzsignalen in ein gewünschtes Band,
einer Analog-zu-Digital-Umwandlungseinheit (3) zum Umwandeln eines Analogsignals, das von der Analogsignalverarbeitungseinheit (2) ausgegeben wird, in ein Digitalsignal, und
einer Digitalsignalverarbeitungseinheit (4) zum Demodulieren des Digitalsignals in gewünschte Digitaldaten, wobei
die Analogsignalverarbeitungseinheit (2) umfasst:
eine Frequenzumwandlungseinheit (201) zum Umwandeln von Frequenzen einer Vielzahl von Funkfrequenzsignalen;
eine Frequenzauswahleinheit (202) zum Auswählen eines Signals, das von der Frequenzumwandlungseinheit bei einer vorbestimmten Bandbreite ausgegeben wird; und
eine Additionseinheit (204) zum Addieren einer Vielzahl von Signalen, die von der Frequenzauswahleinheit ausgegeben werden, und **gekennzeichnet dadurch, dass**
die Analogsignalverarbeitungseinheit (2) weiter eine Frequenzneuumwandlungseinheit (203) zum Umwandeln eines Teiles oder aller Signalfrequenzen in der Vielzahl von Signalen umfasst, die von der Frequenzauswahleinheit (202) ausgegeben werden, wobei
die Additionseinheit (204) angepasst ist, eine Vielzahl von Signalen zu addieren, die von der Frequenzneuumwandlungseinheit (203) ausgegeben werden.

11. Kommunikationsgerät nach Anspruch 10, wobei:
die Frequenzumwandlungseinheit (201) angepasst ist, Mittenfrequenzen der Vielzahl von Funkfrequenzsignalen in gewünschte Frequenzen einer Hälfte oder mehr Signalbandbreiten der Funkfrequenzsignale umzuwandeln.

12. Kommuhikationsgerät nach Anspruch 10, wobei:
die Frequenzumwandlungseinheit (201) angepasst ist, eine Frequenz derart umzuwandeln, dass Mittenfrequenzen der Vielzahl von Funkfrequenzsignalen Gleichstromsignale sein können; und
die Frequenzneuumwandlungseinheit (203) angepasst ist, die gesamte Vielzahl von Signalen derart neu umzuwandeln, dass die Mittenfrequenzen gewünschte Frequenzen von einer Hälfte oder mehr Signalbreiten sein können.

13. Kommunikationsgerät nach Anspruch 10, wobei:
die Frequenzumwandlungseinheit (201) angepasst ist, eine Frequenz derart umzuwandeln, dass die Mittenfrequenzen der Vielzahl von Funkfrequenzsignalen Gleichstromsignale sein können; und
die Frequenzneuumwandlungseinheit (203) angepasst ist, einen Teil der Vielzahl von Signalen derart neu umzuwandeln, dass die Mittenfrequenzen gewünschte Frequenzen von einer Hälfte oder mehr Signalbandbreiten sein können.

14. Kommunikationsgerät nach Anspruch 10, wobei:
die Frequenzumwandlungseinheit (201) angepasst ist, eine Frequenz derart umzuwandeln, dass eine Mittenfrequenz eines ersten Signals eine gewünschte Frequenz von einer Hälfte oder mehr Signalbandbreite sein kann und eine Mittenfrequenz eines zweiten Signals ein Gleichstromsignal sein kann; und
die Frequenzneuumwandlungseinheit (203) angepasst ist, eine Frequenz derart neu umzuwandeln, dass eine Mittenfrequenz eines zweiten Signals eine gewünschte Frequenz von einer Hälfte oder mehr Signalbandbreite sein kann.

15. Kommunikationsgerät nach einem der Ansprüche 10 bis 14, wobei:
die Frequenzumwandlungseinheit (201) einen Mischer (MIX11, 12), einen Phasenschieber (P/S11), einen lokalen Oszillator (OSC11) und eine Bildabeisungsschaltung (Image Rejection Circuit)(IRC1) aufweist.

16. Kommunikationsgerät nach einem der Ansprüche 10 bis 14, wobei:
die Frequenzumwandlungseinheit (201) einen Mischer (MIX11, 12), einen Phasenschieber (P/S11), und einen lokalen Oszillator (OSC11) aufweist.

17. Kommunikationsgerät nach einem der Ansprüche 10 bis 16, wobei:
die Frequenzauswahleinheit (202) von einem Bandpassfilter (BPF11) oder einem Tiefpassfilter gebildet wird.

18. Kommunikationsgerät nach einem der Ansprüche 10 bis 17, wobei:
die Frequenzneuumwandlungseinheit (203) einen Verstärker mit variabler Verstärkung (VGA11), einen Mischer (MIX13, 14) für eine Heraufumwandlung, einen Phasenschieber (P/S12), einen lokalen Oszillator (OSC12) und einen Addierer (ADD11) aufweist.

## Revendications

1. Circuit de traitement de signal analogique, comprenant :
une unité de transformation de fréquence (201) pour transformer les fréquences d'une pluralité de signaux haute fréquence ayant des fréquences centrales différentes ou une pluralité de signaux haute fréquence ayant les mêmes fréquences centrales mais des caractéristiques d'amplitude ou des caractéristiques de phase différentes ;
une unité de sélection de fréquence (202) pour sélectionner un signal sorti en provenance de l'unité de transformation de fréquence (201) à une bande passante prédéterminée ; et
une unité d'addition (204) pour additionner une pluralité de signaux sortis en provenance de l'unité de sélection de fréquence (202), et **caractérisé par**
une unité de retransformation de fréquence (203) pour transformer une partie ou toutes les fréquences de signal dans la pluralité de signaux sortis en provenance de l'unité de sélection de fréquence (202), dans lequel
l'unité d'addition (204) est conçue pour additionner une pluralité de signaux sortis en provenance de l'unité de retransformation de fréquence (203) .

2. Circuit de traitement de signal analogique selon la revendication 1, dans lequel :
l'unité de transformation de fréquence (201) est conçue pour transformer les fréquences centrales de la pluralité de signaux haute fréquence en fréquences souhaitées d'une moitié ou plus des bandes passantes de signal des signaux haute fréquence.

3. Circuit de traitement de signal analogique selon la revendication 1, dans lequel :
l'unité de transformation de fréquence (201) est conçue pour transformer une fréquence de sorte que les fréquences centrales de la pluralité de signaux haute fréquence peuvent être des signaux en courant continu ; et
l'unité de retransformation de fréquence (203) est conçue pour retransformer toute la pluralité de signaux de sorte que les fréquences centrales peuvent être des fréquences souhaitées d'une moitié ou plus des bandes passantes de signal.

4. Circuit de traitement de signal analogique selon la revendication 1, dans lequel :
l'unité de transformation de fréquence (201) est conçue pour transformer une fréquence de sorte que les fréquences centrales de la pluralité de signaux haute fréquence peuvent être des signaux en courant continu ; et
l'unité de retransformation de fréquence (203) est conçue pour retransformer une partie de la pluralité de signaux de sorte que les fréquences centrales peuvent être des fréquences souhaitées d'une moitié ou plus des bandes passantes de signal.

5. Circuit de traitement de signal analogique selon la revendication 1, dans lequel :
l'unité de transformation de fréquence (201) est conçue pour transformer une fréquence de sorte qu'une fréquence centrale d'un premier signal peut être une fréquence souhaitée d'une moitié ou plus de bande passante de signal, et une fréquence centrale d'un second signal peut être un signal en courant continu ; et
l'unité de retransformation de fréquence (203) est conçue pour retransformer une fréquence de sorte qu'une fréquence centrale d'un second signal peut être une fréquence souhaitée d'une moitié ou plus de bande passante de signal.

6. Circuit de traitement de signal analogique selon l'une des revendications 1 à 5, dans lequel :
l'unité de transformation de fréquence (201) possède un changeur de fréquence (MIX11, 12), un dispositif de décalage de phase (P/S11), un oscillateur local (OSC11) et un circuit d'élimination d'image (IRC1) .

7. Circuit de traitement de signal analogique selon l'une des revendications 1 à 5, dans lequel :
l'unité de transformation de fréquence (201) possède un changeur de fréquence (MIX11, 12), un dispositif de décalage de phase (P/S11) et un oscillateur local (OSC11).

8. Circuit de traitement de signal analogique selon l'une des revendications 1 à 7, dans lequel :
l'unité de sélection de fréquence (202) est formée par un filtre passe-bande (BPF11) ou un filtre passe-bas.

9. Circuit de traitement de signal analogique selon l'une des revendications 1 à 8, dans lequel :
l'unité de retransformation de fréquence (203) possède un amplificateur à gain variable (VGA11), un changeur de fréquence (MIX13, 14) pour élever la fréquence, un dispositif de décalage de phase (P/S12), un oscillateur local (OSC12) et un additionneur (ADD11) .

10. Dispositif de communication, comprenant :
une unité frontale (1) pour recevoir une pluralité de signaux haute fréquence ayant des fréquences centrales différentes ou une pluralité de signaux haute fréquence ayant les mêmes fréquences centrales mais des caractéristiques d'amplitude ou des caractéristiques de phase différentes,
une unité de traitement de signal analogique (2) pour transformer la pluralité de signaux haute fréquence en une bande souhaitée,
une unité de transformation analogique - numérique (3) pour transformer un signal analogique sorti en provenance de l'unité de traitement de signal analogique (2) en un signal numérique, et
une unité de traitement de signal numérique (4) pour démoduler le signal numérique en données numériques souhaitées, dans lequel
l'unité de traitement de signal analogique (2) comprend :
une unité de transformation de fréquence (201) pour transformer les fréquences de la pluralité de signaux haute fréquence ;
une unité de sélection de fréquence (202) pour sélectionner un signal sorti en provenance de l'unité de transformation de fréquence à une bande passante prédéterminée ; et
une unité d'addition (204) pour additionner la pluralité de signaux sortis en provenance de l'unité de sélection de fréquence, et **caractérisé en ce que** :
l'unité de traitement de signal analogique (2) comprend en outre une unité de retransformation de fréquence (203) pour transformer une partie ou toutes les fréquences de signal dans la pluralité de signaux sortis en provenance de l'unité de sélection de fréquence ; et
l'unité d'addition (204) est conçue pour additionner une pluralité de signaux sortis en provenance de l'unité de retransformation de fréquence (203).

11. Dispositif de communication selon la revendication 10, dans lequel :
l'unité de transformation de fréquence (201) est conçue pour transformer les fréquences centrales de la pluralité de signaux haute fréquence en fréquences souhaitées d'une moitié ou plus des bandes passantes de signal des signaux haute fréquence.

12. Dispositif de communication selon la revendication 10, dans lequel :
l'unité de transformation de fréquence (201) est conçue pour transformer une fréquence de sorte que les fréquences centrales de la pluralité de signaux haute fréquence peuvent être des signaux en courant continu ; et
l'unité de retransformation de fréquence (203) est conçue pour retransformer toute la pluralité de signaux de sorte que les fréquences centrales peuvent être des fréquences souhaitées d'une moitié ou plus de bandes passantes de signal.

13. Dispositif de communication selon la revendication 10, dans lequel :
l'unité de transformation de fréquence (201) est conçue pour transformer une fréquence de sorte que les fréquences centrales de la pluralité de signaux de fréquence radio peuvent être des signaux en courant continu ; et
l'unité de retransformation de fréquence (203) est conçue pour retransformer une partie de la pluralité de signaux de sorte que les fréquences centrales peuvent être des fréquences souhaitées d'une moitié ou plus de bandes passantes de signal.

14. Dispositif de communication selon la revendication 10, dans lequel :
l'unité de transformation de fréquence (201) est conçue pour transformer une fréquence de sorte qu'une fréquence centrale d'un premier signal peut être une fréquence souhaitée d'une moitié ou plus de bande passante de signal, et une fréquence centrale d'un second signal peut être un signal en courant continu ; et,
l'unité de retransformation de fréquence (203) est conçue pour retransformer une fréquence de sorte qu'une fréquence centrale du second signal peut être une fréquence souhaitée d'une moitié ou plus de bande passante de signal.

15. Dispositif de communication selon l'une des revendications 10 à 14, dans lequel l'unité de transformation de fréquence (201) possède un changeur de fréquence (MIX11, 12), un dispositif de décalage de phase (P/S11), un oscillateur local (OSC11), et un circuit d'élimination d'image (IRC1).

16. Dispositif de communication selon l'une quelconque des revendications 10 à 14, dans lequel :
l'unité de transformation de fréquence (201) possède un changeur de fréquence (MIX11, 12), un dispositif de décalage de phase (P/S11), et un oscillateur local (OSC11).

17. Dispositif de communication selon l'une des revendications 10 à 16, dans lequel l'unité de sélection de fréquence (202) est formée par un filtre passe-bande (BPF11) ou un filtre passe-bas.

18. Dispositif de communication selon l'une des revendications 10 à 17, dans lequel :
l'unité de retransformation de fréquence (203) possède un amplificateur à gain variable (VGA11), un changeur de fréquence (MIX13, 14) pour élever la fréquence, un dispositif de décalage de phase (P/S12), un oscillateur local (OSC12) et un additionneur (ADD11).
